# EUROPEAN PATENT SPECIFICATION

(11) **EP 1 531 682 B1**
(45) Date of publication and mention of the grant of the patent: **24.11.2010**
(21) Application number: 03787741.2
(22) Date of filing: 12.08.2003
(51) Int. Cl.: A23K 1/10

(54) **Feed composition and method of feeding animals**
Futter und Methode zum Füttern von Tieren
Composition pour nourriture pour animaux et procede d'alimentation des animaux

(30) Priority: 14.08.2002 DK 200201207; 20.05.2003 DK 200300762
(43) Date of publication of application: 25.05.2005
(73) Proprietor: Novozymes A/S, 2880 Bagsvaerd (DK)
(72) Inventor: PEDERSEN, Bent Piil, DK-2880 Bagsvaerd (DK); STANDAL, Hakon, N-1671 Krakeroy (NO)
(74) Representative: Kofoed, Gertrud Sonne
(86) International application number: PCT/DK2003/000535
(87) International publication number: WO 2004/016098

(56) References cited:
- EP-A- 0 301 795
- US-A- 3 578 461
- US-A- 3 697 285
- US-A- 3 924 005
- US-A- 4 036 993
- US-A- 4 473 589
- LIASET ET AL: "Studies on the nitrogen recovery in enzymatic hydrolysis of Atlantic salmon frames by Protamex protease" PROCESS BIOCHEMISTRY, vol. 37, 2000, pages 1263-1269,

## Description

### TECHNICAL FIELD

The present invention relates to a feed composition comprising hydrolysed fish protein and a method for feeding animals.

### BACKGROUND OF THE INVENTION

Protein in the feed is essential for growing animals. To achieve the maximal growth rate protein should be available not only in the optimal amount but also in a form best suited for the uptake and utilisation by the growing animal. Fish protein is utilised in feed compositions for feeding many different kind of animals such as fish, pigs, poultry, cattle and fur animals, often in the form of fish meal. Fish meal is prepared from fish raw material by a heating, pressing, separation, and drying process, after which the product is in dried form known as fish meal. The nutritional value of fish meal is variable, depending on factors such as kind and freshness of the raw material and the processing conditions. To increase the nutritional value of feed compositions, the use of fish protein hydrolysate as a replacement for fish meal and other protein sources, has been proposed. Fish protein hydrolysate has a higher content of peptides and free amino acids, which should be easier digestible, especially to young animals whose digestive system is not fully developed. Fish protein hydrolysate additionally has the advantage that it can be produced from waste from fisheries and processing industries.

Fish protein hydrolysate can be in the form of fish silage produced by acid hydrolysis of fish protein. Espe et al. (Aquaculture 174 (1999) 119-137) discloses the partial replacement of fish meal by fish silage concentrate in a feed composition for Atlantic salmon. They observed a maximal growth rate when 15% of the fish meal was replaced by fish silage concentrate. With replacement of 25% or more of fish meal, they observed a lower growth rate than with no fish meal was replacement.

Fish protein hydrolysate can also be prepared by enzymatic hydrolysis of fish protein, e.g. by the process disclosed in US 3697285 utilising an alkaline bacterial protease.

Oliva-Teles et al. (Aquaculture 179 (1999) 195-201) discloses the replacement of fish meal by enzymatically produced fish protein hydrolysate in a feed composition for turbot juveniles. They replaced 7%, 21 %, and 35% of fish meal, respectively, in the feed composition for 3 groups of fish, but found lower growth rates when replacing fish meal with fish protein hydrolysate than in a control group fed a feed composition without replacement.

Cahu et al. (Aquaculture 171 (1999) 109-119) compared the growth rate of sea bass larvae fed with feed compositions where varying amounts of fish meal were replaced by enzymatically produced fish protein hydrolysate. They found the highest grow rate when no or 25% of fish meal was replaced, whereas the growth rate was significantly lower when 50% or 75% of fish meal was replaced by fish protein hydrolysate.

Documents US-A3578461 and US-A-4473589 disclose enzymatic reactions on protein containing materials.

A fish protein hydrolysate that can replace substantial amounts of traditional protein sources in animal feed compositions with beneficial impact on animal growth rate is desired.

### SUMMARY OF THE INVENTION

The present invention relates to a feed composition for feeding animals, prepared by a method comprising a) hydrolysing fish meat with a neutral protease and an alkaline protease, and b) inactivating the proteases by heat treatment.

In another aspect the invention relates to a method of feeding animals with a feed composition comprising a fish protein hydrolysate prepared by a method comprising: a) hydrolysing fish meat with a neutral protease and an alkaline protease; and b) inactivating the proteases by heat treatment.

### DETAILED DISCLOSURE OF THE INVENTION

### Raw material for fish meat hydrolysis

The fish meat used in the present invention may be any kind of fish material comprising protein. The fish meat may be whole fish bodies or parts thereof. Thus, the process of the invention may comprise a step of dividing whole fish bodies into pieces. The fish material may also be waste from filleting of red fish, e.g. salmon or trout, white fish, e.g. cod, haddock or pollack, tuna and mackerel. The fish material may be from any kind of fish, e.g. selected from the group consisting of white fish, red fish or pelagic fish, such as sprat, cod, haddock, tuna, sea eel, salmon, herring, sardine, mackerel, horse mackerel, saury, round herring, Alaska pollack, flatfish, anchovy, pilchard, blue whiting, trout, catfish, bass, capelin, Norway pout a nd h ake or any combinations t hereof. In a p referred embodiment the fish material comprises raw fish meat. By raw fish meat is meant fish meat that has not been subjected to temperatures above the denaturation temperature of the proteins, i.e. in one embodiment above 70°C. In another embodiment of the invention the fish meat has been heated at above 80°C, preferably at temperatures between 90°C and 100°C, and may further have been pressed to remove oil. In one embodiment the fish meat is waste from fish oil production.

### Proteases

A neutral protease according to the invention is defined as a protease with a pH optimum between 6.5 and 7.5, measured according to the Anson method as e.g. described in "Kinetic dimethyl casein method for determination of Alcalase activity by means of <Cobas> FARA centrifugal analyzer (SM-0218.02/01)" available upon request from Novozymes A/S, Bagsværd, Denmark. An alkaline protease according to the invention is defined as a protease with a pH optimum between 8 and 10, measured according to the Anson method. The neutral proteases and alkaline proteases may be of any origin, such as bacterial, fungal, vegetable or animal origin.

In a preferred embodiment of the invention the neutral protease is derived from a microorganism belonging to the species *Bacillus,* in a more preferred embodiment the neutral protease is derived from *Bacillus amyloliquefaciens.* In another preferred embodiment the neutral protease is derived from a microorganism belonging to the species *Aspergillus,* more preferably the neutral protease is derived from *Aspergillus oryzae.* An example of a commercially available neutral protease according to the invention is Neutrase™ (Novozymes A/S, Bagsværd, Denmark).

In a preferred embodiment of the invention the alkaline protease is derived from a microorganism belonging to the species *Bacillus,* in a more preferred embodiment the alkaline protease is derived from *Bacillus licheniformis.* In another preferred embodiment the alkaline protease is derived from a microorganism belonging to the species *Aspergillus,* more preferably the alkaline protease is derived from *Aspergillus oryzae.* An example of a commercially available alkaline protease according to the invention is Alcalase™ (Novozymes A/S, Bagsværd, Denmark).

### Hydrolysis

According to the invention the fish meat is hydrolysed with a neutral protease and an alkaline protease. The hydrolysis may be conducted by any appropriate method known in the art. In a preferred embodiment the fish meat is mixed with water before hydrolysis. In one embodiment the amount of water is between 20% and 200% of the weight of the fish meat, such as between 40% and 150 %, especially between 75% and 125% of the weight of the fish meat. The hydrolysis may be carried out at any appropriate temperature. The temperature will usually be selected so as to achieve a high activity of the enzymes. In a preferred embodiment the temperature is below the denaturation temperature of the proteins, i.e. in one embodiment below approx. 70°C, such as e.g. between 20°C and 70°C, preferably between 40°C and 60°C, more preferably between 50°C and 60°C. The pH of hydrolysis may be any pH. In a preferred embodiment pH is selected so as to achieve a high activity of the enzymes. In another preferred embodiment pH is between 4 and 10, such as between 5 and 9, more preferably between 6 and 8. The pH may be the natural pH of the hydrolysis mixture or it may be adjusted by any methods known in the art such as addition of acid or base. The hydrolysis may be carried out for any time appropriate to achieve the desired result, such as between 10 minutes and 10 hours, preferably between 20 minutes and 4 hours, more preferably between 30 minutes and 2 hours.

In a preferred embodiment the proteases are added to cold fish meat, e.g. at a temperature of, 0-30°C, preferably at 0-20°C, more preferably at 2-10°C. After addition of enzymes the fish meat may be gradually heated, e.g. to a temperature of 40-100°C, preferably 60-100°C, more preferably 80-100°C. In one embodiment the end temperature is sufficient to inactivate the enzyme.

In a preferred embodiment the hydrolysis results in a degree of hydrolysis (DH) between 5% and 50%, such as between 10% and 30%, more preferably between 15% and 20%. DH may be determined by the OPA reaction method as described by Nielsen et al. Journal of Food Science 66 (2001) 642-646 and in "ED-9512723" available upon request from Novozymes A/S, Bagsværd, Denmark.

### Heat treatment

According to the invention hydrolysis is terminated by inactivating the proteases by heat treatment. The heat treatment may be carried out at any temperature and for any time sufficient to inactivate the proteases. In a preferred embodiment the heat treatment is carried out at 80-110°C for 10 seconds-1 hour, more preferably at 85-100°C for 5-30 minutes, most preferably at 90-95°C for 10-20 minutes. In another preferred embodiment heating is conducted at 90-100°C for 10-60 minutes.

### Removal of oil

In one embodiment of the invention the main part of the oil is removed after hydrolysis and inactivation of the enzymes to produce a substantially fat free hydrolysis product. The oil may be removed by any suitable method known in the art. In a preferred embodiment of the invention oil is removed by centrifugation in a separator or decanter centrifuge. In another preferred embodiment oil is removed in a 3-phase decanter further removing insoluble material from the water phase. By "substantially fat free" is meant that the main part of the oil is removed, leaving only the amount of oil usually left when using conventional methods known in the art for removal of oil. The amount of oil in the substantially fat free hydrolysis product may e.g. be 0-10% (w/w) of the dry matter, such as 0-8% (w/w) of the dry matter, preferably 0-5% (w/w) of the dry matter, more preferably 0-2% (w/w) of the dry matter, even more preferably 0-1 % (w/w) of the dry matter.

In one embodiment the amount of oil is reduced compared to conventional fish meal. In a preferred embodiment the amount of oil in the hydrolysis product is reduced compared to the same product produced without use of proteolytic enzymes. The amount of oil in the hydrolysis product may e.g. be 5-90%, such as 10-80%, preferably 20-70%, more preferably 30-60% of the amount of oil in the same product produced without use of proteolytic enzymes.

Many environmental contaminants, e.g. dioxins and PCB (Polychlorinated Biphenyls), which may be present in fish meat, are known to follow the lipid phase. In one embodiment the amount of dioxins and/or P CB is r educed compared to conventional fish meal. In a p referred embodiment the amount of dioxins and/or PCB in the hydrolysis product is reduced compared to the same product produced without use of proteolytic enzymes. The amount of dioxins and/or PCB in the hydrolysis product may e.g. be 5-90%, such as 10-80%, preferably 20-70%, more preferably 30-60% of the amount of dioxins and/or PCB in the same product produced without use of proteolytic enzymes.

In a preferred embodiment of the invention the hydrolysis mixture is passed through a sieve or filter before oil removal, to remove all or some of the insoluble material. In another preferred embodiment the hydrolysis mixture is passed through a filter after oil removal to decrease the turbidity of the product.

In one embodiment insoluble solids are removed from the hydrolysis mixture after inactivation of the enzyme. Solids may e.g. be removed in a press, a decanter, and/or a separator. In a preferred embodiment the hydrolysis mixture is pressed to separate liquid and solids. After pressing oil may be removed from the liquid by any method known in the art, preferably in a decanter and/or a separator.

### Concentration

In a preferred embodiment the hydrolysis product is concentrated by removal of water. Concentration may be performed by any method known in the art, such as evaporation or filtration. In a preferred embodiment the hydrolysis mixture is concentrated in a falling film evaporator and subsequently spray dried.

In one embodiment the concentrate is mixed with solids that have been removed from the hydrolysis mixture, e.g. by pressing or decanting.

### Drying

In a preferred embodiment the hydrolysis product is dried. Drying is preferably conducted after concentration.

In one embodiment the drying is conducted by disc drying. Disc drying is known in the art for drying of fish meal. In a preferred embodiment the hydrolysis product is dried in a vacuum disc dryer.

In another preferred embodiment the hydrolysis product is dried by drum drying. Drum drying is well known in the art for drying of foodstuffs, e.g. milk. A drum dryer operates by applying a thin layer of liquid on rotating heated drums. During drying a film of solid material is formed on the surface of the drums as water evaporates. Scraper knifes continuously remove the dry material from the drums.

In one embodiment salt is added to the hydrolysate for preservation. In a preferred embodiment 5-25% (w/w) salt is added to the hydrolysate, such as 10-20% (w/w) salt, more preferably 10-15% (w/w) salt. Salt may be added at any appropriate point in the process, such as before, after, or during concentration.

### Feed composition

In one aspect the invention relates to a feed composition prepared by a method comprising a) hydrolysing fish meat with a neutral protease and an alkaline protease; and b) inactivating the proteases by heat treatment. The term "feed composition" means any compound, preparation, mixture, or composition suitable for, or intended for intake by an animal. The feed composition may further comprise any other ingredient suitable for intake by animals, e.g. comprising sources of protein, lipids, carbohydrates, salts, minerals and vitamins. The ingredients may be selected, and mixed in any proportions, suitable to meet the nutritional needs of the animals to be fed with the feed composition and/or to keep the raw material cost of the feed composition within desired limits and/or to achieve other desired properties of the feed composition. Ingredients are usually selected among, but not limited to, the following materials: plant derived products, such as seeds, grains, leaves, roots, tubers, flowers, pods, husks, oil, soybean meal, soy protein isolate, potato protein powder, wheat, barley, corn, soybean oil, and corn gluten meal; animal derived products, such as fish meal, fish oil, milk powder, skim milk powder, bone extract, meat extract, blood extract, and the like; additives, such as minerals, vitamins, aroma compounds, and feed enhancing enzymes.

The feed composition according to the invention may contain any amount of fish meat hydrolysate according to the invention suitable to meet the nutritional needs of the animals to be fed with the feed composition and/or to keep the raw material cost of the feed composition within desired limits and/or to achieve other desired properties of the feed composition. In a preferred embodiment the fish meat hydrolysate according to the invention constitutes 0.5-40% (w/w) of the dry matter of the feed composition, preferably 1-30% (w/w) of the dry matter of the feed composition, more preferably 2-16% (w/w) of the dry matter of the feed composition.

The feed composition may be prepared by any method known in the art, such as agglomeration, extrusion, expansion, or pelleting.

### Method of feeding animals

In one aspect the invention relates to a method for feeding animals with a feed composition according to the invention. The feed composition according to the invention may be in any suitable form and administered to the animals in any suitable way known in the art.

### Animals

The term "animals", as used herein, includes all animals. Examples of animals are non-ruminants, and ruminants such as cattle, sheep and horses. In a particular embodiment the animal is a non-ruminant animal. Non-ruminant animals include mono-gastric animals, e.g. pigs or swine (including, but not limited to, piglets, weaners, growing pigs, and sows); poultry such as turkeys and chicken (including but not limited to broiler chicks and layers); young calves; fish including, but not limited to, fresh water and salt water fish, fish larvae, growing fish, salmon, trout, turbot, sea bass, cod, pollack, sea bream, catfish, halibut, eel, carp; shrimp and sea urchin; and fur animals including, but not limited to, mink and fox.

### EXAMPLES

### Fish protein hydrolysate

Fish protein hydrolysate according to the invention was produced from whole fish, heads, backbones and intestines from salmon, trout, pollack and herring, by the following process:
- Raw material and water were mixed in the ratio 1:1.
- The mixture was heated in a reactor with agitation to 55°C
- 1 kg P rotamex™ (a mixture of a neutral protease a nd a n alkaline protease a vailable from Novozymes A/S, Bagsværd, Denmark) pr 1000 kg of raw material was added, and the reaction was followed by measuring pH, ⁰Brix and Osmolality; the enzyme reaction was carried out for 45 minutes, followed by a heat inactivation of the enzyme at 95°C for 15 minutes.
- Sieving to remove bone material
- The mixture was separated using Westfalia SC35 and SB-7 separators. The mixture was separated into a liquid oil phase, a soluble protein fraction, and a paste of insoluble protein fraction.
- The soluble protein fraction was evaporated using a Niro Atomizer FF 150 falling film evaporator.
- The evaporated concentrate was spray dried using a Niro Atomizer P-6 spray drier.

### EXAMPLE 1

### Replacement of fish meal by fish protein hydrolysate in a feed composition for salmon

50 fish (Atlantic salmon, approx. 125 g initial weight) were randomly allocated to each of 16 1 cubic meter tanks containing salt water at 7-8°C. Tanks were divided in 4 groups and each group was fed one of 4 experimental diets according to table 2. The diets were formulated to be iso-nitrogenous and iso-energetic on a crude protein and gross energy basis, and contained 10 % soy bean meal, approx. 14% starch from wheat, 35% lipid from fish oil and 35% crude protein. The 4 experimental diets contained varying amounts of LT-Fish meal (Norse LT-94 Norsildmel, Fyllingsdalen, Norway) and Fish Protein Hydrolysate prepared as described above. Composition of fish meal and fish protein hydrolysate is given in table 1

Uneaten feed was collected from the outlet water from the tanks as described by Helland et al., Aquaculture 139, 1996, 157-163. The fish were fed approx. 15% in excess based on expected feed requirements and uneaten feed in the spillage collectors. The fish were weighed individually with predetermined intervals during the experiment and fasted for one day prior to weighing.

**Table 1. Composition of fish meal and fish protein hydrolysate**

| | LT-Fish meal | Fish Protein Hydrolysate |
|---|---|---|
| Dry matter (DM), g/kg | 934.9 | 977.4 |
| Lipid, g/kg DM | 141.2 | 55.9 |
| Starch, g/kg DM | 3.1 | 0.7 |
| Ash, g/kg DM | 151.0 | 64.3 |
| Crude protein, g/kg DM | 752.2 | 902.9 |

**Table 2. Formulation and composition of feed compositions, and growth data for salmon fed respective feed compositions (average ± standard deviation).**

| | **FM** | **FPH-05** | **FPH-10** | **FPH-15** |
|---|---|---|---|---|
| **Formulation:** | | | | |
| Fish meal¹, g/kg | 411.1 | 344.9 | 279.0 | 211.6 |
| Fish protein hydrolysate, (FPH) | 0.0 | 51.2 | 102.8 | 154.3 |
| g/kg | | | | |
| Fish oil, g/kg | 313.0 | 320.1 | 327.5 | 334.4 |
| Soybean meal², g/kg | 102.2 | 102.5 | 102.8 | 102.9 |
| Wheat, g/kg | 170.4 | 178.1 | 184.6 | 193.6 |
| Constant ingredients3, g/kg | 3.3 | 3.3 | 3.3 | 3.3 |
| | | | | |
| **Composition:** | | | | |
| Dry matter, g/kg | 948.7 | 945.0 | 946.8 | 943.7 |
| Crude fish protein, g/kg | 279 | 279 | 280 | 279 |
| - from fish meal | 279 | 234 | 189 | 143 |
| - from FPH | 0 | 45 | 91 | 136 |
| % of crude fish protein from FPH | 0 | 16 | 33 | 49 |
| Gross energy, MJ | 26.2 | 26.5 | 26.5 | 26.5 |
| | | | | |
| **Weight of fish fed the respective feed compositions:** | | | | |
| 0 days, g | 163±1 | 164±1 | 163±1 | 163±1 |
| 28 days, g | 210±3 | 227±1 | 231±2 | 233± 2 |
| 56 days, g | 285±8 | 310±7 | 325±8 | 335±5 |
| | | | | |
| **Specific growth rate⁴ (SGR) of fish fed the respective feed compositions:** | | | | |
| 0-28 days | 1.02±0.06 | 1.29±0.03 | 1.39±0.02 | 1.43±0.03 |
| 29-60 days | 1.22±0.06 | 1.25±0.08 | 1.36±0.07 | 1.45±0.03 |

| | | | | |
|---|---|---|---|---|
| ¹Norse LT-94 (Norsildmel, Fyllingsdalen, Norway). ²Denosoy (Denofa, Fredrikstad, Norway). ³Constant ingredients, per kg: 2.9 g vitamin and mineral premix (G.O. Johnsen, Oslo, Norway); 0.3 g phosphorylated vitamin C (G.O. Johnsen); 0.1 g Y₂O₃ (Sigma Chemical Company, St. Louis, Mo, USA). ⁴Specific growth rate: The percentual daily weight increase. | | | | |

### Results

Table 2 shows the average weight and specific growth rate of fish in the 4 different groups. It is seen that the growth rate increases with increasing substitution of fish meal with the fish protein hydrolysate of the invention. Surprisingly, the highest growth rate is obtained at the highest level of substitution, were 49% (based on crude protein) of the fish meal has been replaced by the fish protein hydrolysate of the invention.

### EXAMPLE 2

### Growth of piglets when soy protein isolate is substituted with fish protein hydrolysate in the feed composition.

48 piglets 24 days old and weighing 7.6 kg on average were distributed in 4 groups according to a randomised block design. The piglets were housed individually under standardised conditions. For 3 weeks the piglets were fed a prestarter feed mix and for the subsequent 3 weeks a starter feed mix. Both were pelleted and offered for ad libitum intake. One group acted as control, in the 3 remaining groups varying a mounts of soy protein isolate were substituted with the f ish protein hydrolysate of the invention. Composition of the diets is given in table 1 and 2. Body weight gain, ad libitum feed intake and feed conversion ratio (g feed/g weight gain) were recorded.

**Table 1: Composition of the pre-starter diets (%)**

| Group | I | II | III | IV |
|---|---|---|---|---|
| Fish protein hydrolysate | - | 2.0 | 4.0 | 6.0 |
| Soy protein isolate | 6.0 | 4.0 | 2.0 | - |
| Skim milk powder | 15.0 | 15.0 | 15.0 | 15.0 |
| Potato protein powder | 3.5 | 3.5 | 3.5 | 3.5 |
| Corn gluten meal | 2.76 | 2.85 | 2.92 | 3.00 |
| Barley | 20.0 | 20.0 | 20.0 | 20.0 |
| Corn | 20.0 | 20.0 | 20.0 | 20.0 |
| Wheat | 28.93 | 28.98 | 29.04 | 29.10 |
| Soybean oil | 0.74 | 0.69 | 0.63 | 0.57 |
| L-Lysin · HCl | 0.16 | 0.11 | 0.06 | 0.01 |
| L-Tryptophan | - | - | 0.01 | 0.02 |
| Minerals and Vitamin premix | 2.91 | 2.87 | 2.84 | 2.80 |

**Table 2: Composition of starter diets (%)**

| Group | I | II | III | IV |
|---|---|---|---|---|
| Fish protein hydrolysate | - | 2.0 | 4.0 | 6.0 |
| Soy protein isolate | 6.0 | 4.0 | 2.0 | - |
| Potato protein powder | 5.54 | 5.62 | 5.69 | 5.76 |
| Barley | 44.68 | 44.73 | 44.79 | 44.85 |
| Corn | 20.0 | 20.0 | 20.0 | 20.0 |
| Wheat | 20.0 | 20.0 | 20.0 | 20.0 |
| Soybean oil | 0.45 | 0.40 | 0.34 | 0.29 |
| L-Lysin · HCl | 0.26 | 0.20 | 0.15 | 0.09 |
| L-Tryptophan | - | 0.01 | 0.02 | 0.03 |
| Minerals and Vitamin | 3.07 | 3.04 | 3.01 | 2.98 |
| premix | | | | |

### Results

The average values of initial and final weights, growth rate and feed intake for the total experimental period are given in table 3. It is seen that the substitution of soy meal with fish protein hydrolysate according to the invention has beneficial influence on the growth of the piglets.

**Table 3: Growth performance of piglets during the total experimental period (average ± standard deviation)**

| Group | I | II | III | IV |
|---|---|---|---|---|
| Fish protein hydrolysate (%) | 0 | 2 | 4 | 6 |
| Initial weight (kg) | 7.66 ±57 | 7.64 ±0.71 | 7.65 ±0.93 | 7.66 ±0.64 |
| Final weight (kg) | 27.45 ±2.80 | 27.83 ±2.71 | 28.15 ±3.51 | 28.34 ±1.36 |
| relative | 100 | 101.4 | 102.6 | 103.2 |
| Growth rate (g/day) | 471 ±67 | 480 ±57 | 488 ±67 | 493 ±30 |
| relative | 100 | 101.9 | 103.6 | 104.7 |
| Feed intake (g/day) | 732 ±94 | 743 ±87 | 760 ±104 | 767 ±50 |
| relative | 100 | 101.5 | 103.8 | 104.8 |

### EXAMPLE 3

### Drum drying of hydrolysis product

A fish meat hydrolysate was produced as in the foregoing examples except that drying was conducted in a steam heated drum dryer.

The following conditions were used in the drum dryer:
Steam pressure: 7.3 bar(g)
Surface temperature: ∼165 °C.
Liquid feed solids content: 49%
Drum rotational speed: 5 rpm
Dryer set-up: 1.5 m² double drum counter-rotating drums
Production capacity: 15.3 kg/m²/hr end product
Energy consumption: Steam consumption approx. 1.4 kg/kg water evaporated.

The hydrolysate formed a nice liquid film resulting in a good sheet of dry material coming off at the scraper knifes.

The hydrolysate had the following properties:
Residual moisture content: 2.1%
Bulk density: 340 g/l unstamped, 390 g/I stamped

## Claims

1. A feed composition for feeding animals, prepared by a method comprising:
a) hydrolysing fish meat with a neutral protease and an alkaline protease, and
b) inactivating the proteases by heat treatment.

2. The feed composition of claim 1 further comprising removing the main part of the oil from the hydrolysed fish meat after step b).

3. The feed composition of claim 1 wherein the animals are fish.

4. The feed composition of claim 3 wherein the fish are selected from the group consisting of salmon, trout, turbot, sea bass, cod, pollack, sea bream, catfish, halibut, eel, carp.

5. The feed composition of claim 1 wherein the animals are shrimps or sea urchins.

6. The feed composition of claim 1 wherein the animals are pigs or swine.

7. The feed composition of claim 1 wherein the neutral protease and/or the alkaline protease are derived from *Bacillus.*

8. The feed composition of claim 1 wherein the neutral protease is derived from *Bacillus amyloliquefaciens.*

9. The feed composition of claim 1 wherein the alkaline protease is derived from *Bacillus licheniformis.*

10. The feed composition of claim 1 wherein the fish meat is raw.

11. The feed composition of claim 1 wherein the fish meat has not been subjected to temperatures above 70°C before hydrolysis.

12. The feed composition of claim 1 wherein the fish meat is hydrolysed to a degree of hydrolysis of 10-30%.

13. The feed composition of claim 1 wherein the fish meat is hydrolysed to a degree of hydrolysis of 15-20%.

14. The feed composition of claim 1 wherein the method further comprises removing solids after step b).

15. The feed composition of claim 14 wherein the solids are removed in a press and/or a separator and/or a decanter.

16. The feed composition of claim 1 wherein the method further comprises drying the hydrolysis product after step b).

17. The feed composition of claim 16 wherein the drying is conducted by drum drying.

18. A method of feeding animals with a feed composition comprising a fish protein hydrolysate prepared by a method comprising:
a) hydrolysing fish meat with a neutral protease and an alkaline protease, and
b) inactivating the proteases by heat treatment.

19. A method for preparing a feed composition comprising:
a) hydrolysing fish meat with a neutral protease and an alkaline protease, and
b) inactivating the proteases by heat treatment.

## Patentansprüche

1. Eine Futterzusammensetzung zum Füttern von Tieren, hergestellt durch ein Verfahren, umfassend:
a) Hydrolysieren von Fischfleisch mit einer neutralen Protease und einer alkalischen Protease, und
b) Inaktivieren der Proteasen durch Wärmebehandlung.

2. Die Futterzusammensetzung nach Anspruch 1, weiterhin umfassend das Entfernen des Hauptteils des Öls aus dem hydrolysierten Fischfleisch nach Schritt b).

3. Die Futterzusammensetzung nach Anspruch 1, wobei die Tiere Fische sind.

4. Die Futterzusammensetzung nach Anspruch 3, wobei die Fische aus der Gruppe ausgewählt sind, bestehend aus Lachs, Forelle, Steinbutt, Zackenbarsch, Kabeljau, Pollack, Seebrasse, Katzenwels, Heilbutt, Aal, Karpfen.

5. Die Futterzusammensetzung nach Anspruch 1, wobei die Tiere Garnelen oder Seeigel sind.

6. Die Futterzusammensetzung nach Anspruch 1, wobei die Tiere Schweine oder Ferkel sind.

7. Die Futterzusammensetzung nach Anspruch 1, wobei sich die neutrale Protease und/oder die alkalische Protease von *Bacillus* ableiten.

8. Die Futterzusammensetzung nach Anspruch 1, wobei sich die neutrale Protease von *Bacillus amyloliquefaciens* ableitet.

9. Die Futterzusammensetzung nach Anspruch 1, wobei sich die alkalische Protease von *Bacillus licheniformis* ableitet.

10. Die Futterzusammensetzung nach Anspruch 1, wobei das Fischfleisch roh ist.

11. Die Futterzusammensetzung nach Anspruch 1, wobei das Fischfleisch vor der Hydrolyse noch keinen Temperaturen über 70 °C unterzogen wurde.

12. Die Futterzusammensetzung nach Anspruch 1, wobei das Fischfleisch bis zu einem Hydrolysegrad von 10-30 % hydrolysiert ist.

13. Die Futterzusammensetzung nach Anspruch 1, wobei das Fischfleisch bis zu einem Hydrolysegrad von 15-20 % hydrolysiert ist.

14. Die Futterzusammensetzung nach Anspruch 1, wobei das Verfahren weiterhin das Entfernen von Feststoffen nach Schritt b) umfasst.

15. Die Futterzusammensetzung nach Anspruch 14, wobei die Feststoffe in einer Presse und/oder einem Abscheider und/oder einem Dekantiergefäß entfernt werden.

16. Die Futterzusammensetzung nach Anspruch 1, wobei das Verfahren weiterhin das Trocknen des Hydrolyseprodukts nach Schritt b) umfasst.

17. Die Futterzusammensetzung nach Anspruch 16, wobei das Trocknen durch Trommeltrocknen durchgeführt wird.

18. Ein Verfahren zum Füttern von Tieren mit einer Futterzusammensetzung, umfassend ein Fischproteinhydrolysat, hergestellt durch ein Verfahren, umfassend:
a) Hydrolysieren von Fischfleisch mit einer neutralen Protease und einer alkalischen Protease, und
b) Inaktivieren der Proteasen durch Wärmebehandlung.

19. Ein Verfahren zur Herstellung einer Futterzusammensetzung, umfassend:
a) Hydrolysieren von Fischfleisch mit einer neutralen Protease und einer alkalischen Protease, und
b) Inaktivieren der Proteasen durch Wärmebehandlung.

## Revendications

1. Une composition alimentaire pour nourrir les animaux, préparée par un procédé comprenant :
a) l'hydrolyse de chair de poisson avec une protéase neutre et une protéase alcaline, et
b) l'inactivation des protéases par un traitement par la chaleur.

2. Composition alimentaire de la revendication 1 comprenant en outre l'étape consistant à retirer la majeure partie de l'huile provenant de la chair de poissons hydrolysée après l'étape b).

3. Composition alimentaire de la revendication 1 dans laquelle les animaux sont des poissons.

4. Composition alimentaire de la revendication 3 dans laquelle les poissons sont choisis dans le groupe constitué par le saumon, la truite, le turbot, le bar, la morue, le lieu jaune, la dorade, le poisson-chat, le flétan, la lamproie et la carpe.

5. Composition alimentaire de la revendication 1 dans laquelle les animaux sont des crevettes ou des oursins.

6. Composition alimentaire de la revendication 1 dans laquelle les animaux sont des cochons ou des porcs.

7. Composition alimentaire de la revendication 1 dans laquelle la protéase neutre et/ou la protéase alcaline sont dérivées de *Bacillus.*

8. Composition alimentaire de la revendication 1 dans laquelle la protéase neutre est dérivée de *Bacillus amyloliquefaciens.*

9. Composition alimentaire de la revendication 1 dans laquelle la protéase alcaline est dérivée de *Bacillus licheniformis.*

10. Composition alimentaire de la revendication 1 dans laquelle la chair de poisson est crue.

11. Composition alimentaire de la revendication 1 dans laquelle la chair de poisson n'a pas été soumise à des températures supérieures à 70°C avant hydrolyse.

12. Composition alimentaire de la revendication 1 dans laquelle la chair de poisson est hydrolysée jusqu'à un degré d'hydrolyse de 10 à 30%.

13. Composition alimentaire de la revendication 1 dans laquelle la chair de poisson est hydrolysée jusqu'à un degré d'hydrolyse de 15 à 20%.

14. Composition alimentaire de la revendication 1 dans laquelle le procédé comprend en outre l'élimination des solides après l'étape b).

15. Composition alimentaire de la revendication 14 dans laquelle les solides sont éliminés dans une presse et/ou un séparateur et/ou un décanteur.

16. Composition alimentaire de la revendication 1 dans laquelle le procédé comprend en outre le séchage du produit d'hydrolyse après l'étape b).

17. Composition alimentaire de la revendication 16 dans laquelle le séchage est effectué par séchage sur cylindre.

18. Un procédé pour nourrir les animaux avec une composition alimentaire comprenant un hydrolysat de protéines de poisson préparée par un procédé comprenant :
a) l'hydrolyse de chair de poisson avec une protéase neutre et une protéase alcaline, et
b) l'inactivation des protéases par un traitement par la chaleur.

19. Un procédé pour préparer une composition alimentaire comprenant :
a) l'hydrolyse de chair de poisson avec une protéase neutre et une protéase alcaline, et
b) l'inactivation des protéases par un traitement par la chaleur.
